(19) Europäisches Patentamt
European Patent Office
Office européen des brevets

(11) **EP 2 075 618 B1**

(12) **EUROPEAN PATENT SPECIFICATION**

(45) Date of publication and mention of the grant of the patent:
**04.05.2016 Bulletin 2016/18**

(51) Int Cl.:
**G02B 26/06** *(2006.01)*     **G02B 26/08** *(2006.01)*
**G02B 27/28** *(2006.01)*     **G01B 9/02** *(2006.01)*
**H01S 3/08** *(2006.01)*      *G02B 5/04* *(2006.01)*

(21) Application number: **08172968.3**

(22) Date of filing: **29.12.2008**

(54) **The method of light beam back reflection and retro-reflector for realization**

Die Methode der rückwarts gerichteten Reflektion des Lichtstrahls und seiner Verwirklichung durch den Retro-Reflektor

La méthode de réflexion arrière de rayon lumineux et sa réalisation par retro-réflecteur

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.12.2007 LT 2007084**

(43) Date of publication of application:
**01.07.2009 Bulletin 2009/27**

(73) Proprietor: **UAB "Ekspla"**
**02300 Vilnius (LT)**

(72) Inventors:
• **Balickas, Stanislovas**
**08210 Vilnius (LT)**
• **Antanavicius, Romaldas**
**14167 Vilnius (LT)**
• **Michailovas, Andrejus**
**06325 Vilnius (LT)**

(74) Representative: **Draugeliene, Virgina Adolfina Tarpine Ltd**
**A. P. Kavoliuko g. 24-152**
**04328 Vilnius (LT)**

(56) References cited:
**EP-A1- 1 662 623     US-A1- 2003 128 732**
**US-B1- 6 198 574     US-B1- 6 647 033**
**US-B2- 7 165 850**

• **SINGH I ET AL: "DESIGN OF A HIGH-POWER ND:YAG Q-SWITCHED LASER CAVITY" APPLIED OPTICS, OPTICAL SOCIETY OF AMERICA, US LNKD- DOI:10.1364/AO.34.003349, vol. 34, no. 18, 20 June 1995 (1995-06-20) , pages 3349-3351, XP000508506 ISSN: 0003-6935**

**Description**

The invention relates to the field of lasers, namely to the method and the device of light beam's backward reflection, during which the vertical and the horizontal coordinates of the incident light beam's profile are interchanged, while retaining a linear polarization of the light beam, and it can be used in laser radiation sources of tunable wavelength.

There is a known method of light beam's backward reflection used in a laser system, which retains a linear polarization of a light beam, comprising incident light beam's successive reflections from several total internal reflection planes, covered with interference coatings to ensure the phase shift between the perpendicular (s) and the parallel (p) polarization components during each reflection in such a way that it preserves a linear polarization of the reflected light beam, and the orientation of the linear polarization vector of the backward beam coincides with the initial orientation of the polarization vector after the last reflection (see U.S. patent 7165850).

There is a known retroreflector used in a laser system, which maintains a linear polarization of a light beam, comprising several total internal reflection planes in a transparent material covered with the interference coatings arranged in the path of the light beam in such a way that during each reflection the phase shift between the perpendicular (s) and the parallel (p) polarization components ensures a linear polarization of the reflected light beam, and the orientation of the linear polarization vector of the backward beam coincides with the orientation of the initial polarization vector after the last reflection (see U.S. patent 7165850).

The drawback of the known method of the light beam's backward reflection and the retroreflector used for its realization is a high degree of dispersion (the necessary phase shift between the s and p polarization components depends on the radiation wavelength). This type of retroreflector retains linear polarization in a narrow wavelength range, and due to this reason it is not suitable to be used in tunable laser radiation sources (optical parametric generators).

There is a known method of a light beam's backward reflection used in a laser system, which interchanges the vertical and the horizontal coordinates of the incident light beam's profile and retains a linear light polarization, which includes successive reflections of the incident light from several planes of total internal reflection and the polarization rotation by the means of polarization rotators such as Faraday rotators in a way that after the reflection the linear polarization does not convert into an elliptical (see European patent 1662623).

There is a known light beam retroreflector used in a laser system, which interchanges the vertical and the horizontal coordinates of the incident light beam's profile and retains a linear light polarization, which comprises several total internal reflection planes arranged in the path of an incident light beam, and the polarization rotators, for example, Faraday rotators, for the polarization management in a way that after the reflection the linear polarization does not convert into an elliptical (Europe patent 1662623).

The drawback of the known method of the light beam's backward reflection and the retroreflector used for its realization is that an additional polarization management operation is necessary, and the polarization rotator used for the retroreflector's realization suffers high degree of dispersion (the polarization rotation angle depends on the radiation wavelength). Therefore this type of retroreflector retains linear polarization only in the narrow wavelength range. In addition, some Faraday rotators have certain absorption bands in UV and visible light ranges. For these reasons the application field of the said retroreflector narrows, for example, they are not suitable for tunable laser radiation sources (optical parametric generators).

The closest by its technical essence is a method of the light beam's backward reflection used in an optical parametric generator, which interchanges the vertical and the horizontal coordinates of the incident light beam's profile and retains the light beam's linear polarization, comprising the incident light beam's successive reflections from several total internal reflection planes and the polarization management by a $\lambda/2$ phase retardation plate, while ensuring the linear polarization during the total internal reflection and the orientation of the linear polarization vector of the backward beam coinciding with the initial orientation of the polarization vector (see U.S. patent 6647033).

The closest by its technical essence is a retroreflector used in an optical parametric generator, which interchanges the vertical and the horizontal coordinates of the incident light beam's profile and retains the light beam's linear polarization, comprising several total internal reflection planes arranged in the light beam's way through a transparent material, for example, a Porro prism rotated at 45° angle, and the polarization control element, for example, $\lambda/2$ phase retardation plate, which rotates the polarization vector in such a way that the linear polarization does not convert to an elliptical during the reflection and the orientation of the linear polarization vector of the backward reflected beam coincides with the initial orientation of the polarization vector (see U.S. patent 6647033). The drawback of this light beam's backward reflection method and the retroreflector used for its realization is a narrow wavelength range, in which a linear polarization can be ensured. It is impossible to achieve the same polarization rotation in a wide spectral range by the means of the phase retardation plate, and the said retroreflector does not ensure pure state of radiation polarization across the entire tuning range of the optical parametric generator.

The goal of this invention is to create a method of light beam's backward reflection and a retroreflector for the method's realization, with an expanded spectral range in which a steady linear polarization is ensured, i.e. the polarization type and the direction would not change, and such that it could extend the applicability of the method and retroreflector as definen in claims 1-7.

The essence of this invention lies in the fact that the proposed method of light beam's backward reflection interchanging the vertical and the horizontal coordinates of an incident light beam's profile and retaining the light beam's linear polarization, comprising the successive reflections of the incident light beam from several total internal reflection planes in the transparent material, during each total internal reflection, the incident light beam, along with an image rotation, also possesses the phase shift between the perpendicular ($s$) and the parallel ($p$) polarization components, the beam experiences at least four reflections, as a result the vertical and the horizontal coordinates of the back reflected beam's profile get interchanged, and the said phase shift results in the linear polarization state coinciding with the initial one.

In the light beam's backward reflection method, wherein the incident light beam experiences at least 4 total internal reflections, during each reflection, the said beam, along with an image rotation, experiences the phase shift between the perpendicular ($s$) and the parallel ($p$) polarization components, at the same time, there emerges the possibility to control the image rotation and the said phases shift. As a result, the vertical and the horizontal coordinates of the beam image's profile get interchanged, while the polarization state remains linear and of a steady orientation.

The proposed retroreflector interchanges the vertical and the horizontal coordinates of the incident light beam's profile and retains light beam's linear polarization, it comprises several total internal reflection planes arranged in the path of the light beam through a transparent material, from which the said beam is successively reflected, it provides no less than four total internal reflection planes arranged in space in such a way that the incident light beam, reflected from each plane of total internal reflection, along with an image rotation, experiences the phase shift between the perpendicular ($s$) and the parallel ($p$) polarization components, and after the last reflection the vertical and the horizontal coordinates of the back reflected beam's profile get interchanged. The said total phase shift ensures that the beam's linear polarization has a direction, which coincides with the initial direction of the polarization.

There is a possibility to control both the image rotation and the said phase shift by arranging in space the said total internal reflection planes and to achieve that the vertical and the horizontal coordinates interchange and the linear polarization keeps its orientation by the means of the retroreflector, comprising at least four total internal reflection planes arranged in the path of an incident light beam, performing the image rotation and introducing the phase shift between the perpendicular ($s$) and the parallel ($p$) polarization components, while reflecting the said beam. The linear polarization is not retained inside the retroreflector, but the polarization is linear again behind the retroreflector and its orientation coincides with the initial orientation. The retroreflector of this invention performs the same operation, as the two elements of the prototype - the Porro prism turned at 45° angle, and the $\lambda/2$ phase retardation plate.

The advantage of the proposed backward reflection method and the retroreflector lies in the fact that the retroreflector's geometry (the location of the reflection planes in space) and herewith both the beam's image and the polarization control depend only on the refractive index of the transparent material from which the retroreflector is made. It is easy to select a transparent material, which ensures steady linear polarization in a wide wavelength range.

The retroreflector is made from two right-angled prisms, which are rotated in respect to each other and the incident beam's linear polarization vector in such a way, that during the propagation through the pair of prisms, the incident beam experiences four total internal reflections from the relevant planes of the said prisms. Two separate right-angle prisms are relatively simple elements. Any supplier of optical elements can manufacture such a pair of prisms. In another possible implementation, the prisms are made from different transparent materials.

The retroreflector of the OPG resonator is made as a monolithic optical element, in which the incident beam experiences at least four total internal reflections. The monolithic element has better mechanical stability and lower energy losses, but it is more complicated to manufacture than the pair of prisms.

The use of the retroreflector in the resonator of the optical parametric generator (OPG) improves the beam quality of the OPG and ensures high level of polarization purity in the entire tuning range of the generator.

The details of the invention are illustrated in the figures:

Fig. 1 - an optical layout of the proposed retroreflector;

Fig. 2 - an illustrative explanation of the influence of the retroreflector, presented in Fig. 1, on the beam properties;

Fig. 3 - an optical layout of the retroreflector showing a single beam trajectory and marked positions, in which the changes of the beam's profile are observed;

Fig. 4 - an illustration of beam profiles propagating through the retroreflector at the positions according to Fig. 3;

Fig. 5 - an optical layout of the retroreflector, showing a single path of a beam with marked positions of the beam polarization variations;

Fig. 6 - the illustrations of the beam polarization, while propagating through the retroreflector at the positions according to Fig.5;

Fig. 7 - a mutual orientation of the coordinate systems and the amplitude relationships of the polarization components;

Fig. 8 - the dependence of an angle $\Theta$ on the refractive index of the proposed retroreflector material;

Fig. 9 - the dependence on the wavelength of the depolarization losses inside the resonator with the proposed retroreflector.

The proposed method of light beam's backward reflection includes the following sequence of operations:

- Direct the beam to a transparent material so that, while propagation through, the incident beam is consequently reflected from at least four total internal reflection planes,

- The incident light beam along with the image rotation also experiences a phase shift between the perpendicular (*s*) and the parallel (*p*) polarization components during each total internal reflection,

- After at least four of those reflections the vertical and the horizontal coordinates of the back reflected beam's profile get interchanged, and the said total phase shift ensures that the linear polarization coincides with the direction of the initial polarization.

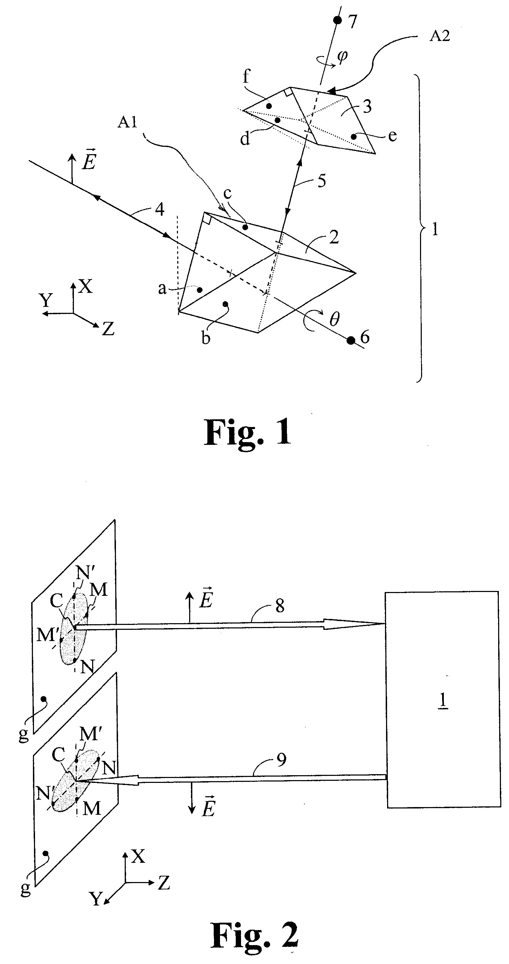

The retroreflector (1) for the realization of the proposed method is shown in Fig. 1. The retroreflector (1) is made from two total internal reflection prisms (2, 3), e.g. right-angled prisms. The prism (2) is orientated in such a way that the incident beam (4), when reflected from its plane **b**, changes the propagation direction by 90° angle and is directed to the second prism (3), i.e. the total internal reflection plane **b** produces a 45° angle with the direction of the incident beam. The prism (3) is orientated in such a way, that the incident beam (5), when reflected from the planes **e** and **f**, changes the direction of the propagation at 180° angle, i.e. the reflection planes **e** and **f** produce 45° angle with the direction of the incident beam (5) (the right-angled prism orientated in such a way is called a Porro prism). Other prism planes **a**, **c**, **d**, through which passes the beam, do not influence neither the propagation direction nor the beam's profile nor the polarization, therefore they will not be considered further.

The prisms (2) and (3) are azimuthally rotated at angles $\Theta$ and $\varphi$ about the direction of the respective beam propagation (4, 5). $\Theta$ is an angle between the polarization vector of the incident beam and the p axis ($P_1$) of the first prism (2), $\varphi$ is an angle between *p* axes of the both retroreflector prisms. The angle $\Theta$ is positive if the first prism (2) of the retroreflector is rotated clockwise, if observed from the point (6); the angle $\varphi$ is positive if the second prism (3) of the retroreflector is rotated clockwise, if observed from the point (7). The angle $\Theta$ is positive and the angle $\varphi$ is negative as shown in Fig. 1. The particular values of the angles $\Theta$ and $\varphi$ depend on the refractive index of the prisms.

The invention is not restricted only to the realization of the retroreflector according to Fig. 1. In a general case, the first prism can be not only a right-angle prism. Then the directions of the beam propagation (4) and (5) produce an internal angle $2\alpha$, where $\alpha$ is an angle of the incidence with the plane **b**. The planes **a** and **c** will nevertheless be perpendicular to the direction of the beam propagation. Moreover, the retroreflector (1) can be made as a single monolithic element. Then the mechanical stability is improved and the reflection losses are minimized due to the elimination of the surfaces **c** and **d**.

Fig. 2 illustrates how the beam's profile and the polarization are affected during one transit through the retroreflector (1). Suppose the beam's profile is elliptical in shape in a plane **g**, which is perpendicular to the direction of the beam propagation, i.e. points M and N are of the same intensity, but they lie at different distances from the centre of the beam (C) on two perpendicular axes. The polarization of the beam (7) incident on the retroreflector is linear with the direction coinciding with the direction of the X axis and coincides with the long axis NN' of the beam's profile. After the reflection, the long (NN') and the short (MM') axes of the profile of the back reflected beam (8) get interchanged, whereas the orientation of the linear polarization vector remains unchanged. The polarization vector of the returning beam (8) preserves the direction, which coincides with the X axis, which means that the retroreflector (1) shifts the phase by $\pi$.

The principle of operation of the proposed retroreflector is based on the incident beam's profile and the polarization changes during the total internal reflections. Fig. 1 illustrates the single beam propagating in the directions (4) and (5). As the real beam features the transverse dimensions, one could present it as a multiple of beams traversing the resonator following different trajectories.

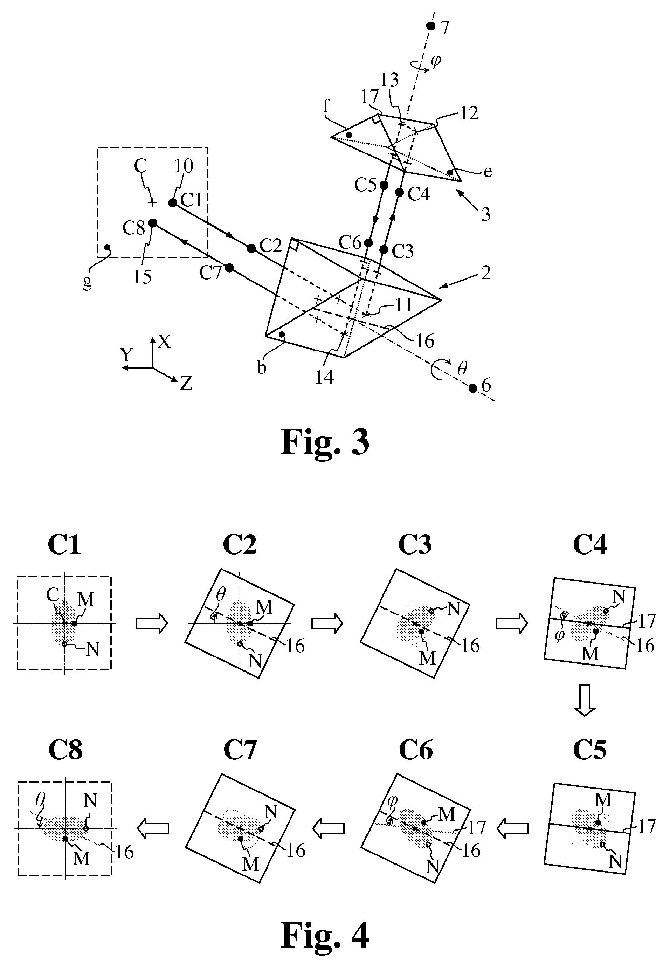

Fig. 3 shows a single non-axial beam trajectory during a single transit through the retroreflector. The beam center is marked as C. The trajectory is presented as consisting of segments between the initial point (10) in the reference plane **g**, the reflection points (11, 12, 13, 14) in the retroreflector planes **b**, **e**, **f** and the end point (15) in the reference plane **g.** The beam's profile is observed from the point (6) at the positions C1, C2, C7, and C8 and from the point (7) - at the positions C3-C6. The positions C1-C8 on the trajectory are marked for tracing the changes of the beam's profile: C1, C2 - before the retroreflector, i.e. before the first reflection, C3, C4 - after the first reflection, C5, C6 - after the second and the third reflections, C7, C8 - after the fourth reflection, i.e. after the retroreflector. Also the two important lines are marked on Fig. 3: the centre-line (16) of the plane **b** of the first retroreflector prism (2) and the edge (17) of the second retroreflector prism (3). It is well known that the right-angled prism inverts the image with respect to the centre-line of the reflection plane, and the Porro prism inverts the image with respect to the edge.

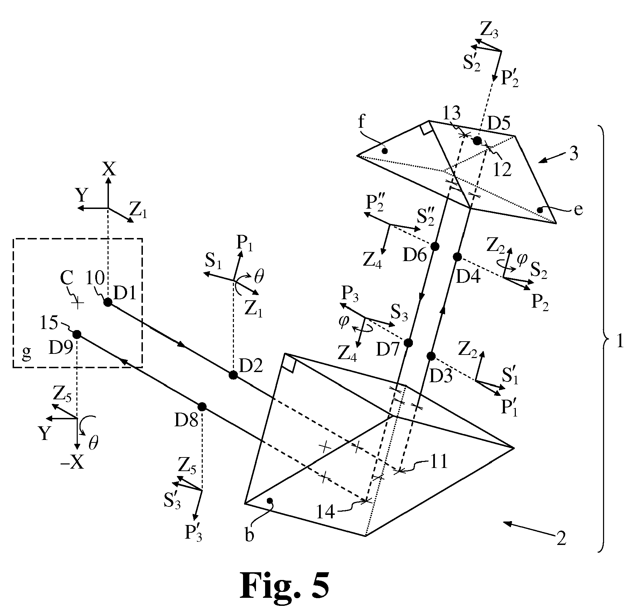

Trace, how the asymmetrical beam's profile is rotated and how the transverse positions of the reference beam's profile points M and N vary, when the beam propagates through the retroreflector (1). Suppose the short axis of the beam's profile is horizontal and the long axis is vertical at the initial reference position (Fig. 4 C1), i.e. in the reference plane **g** before the retroreflector. The point M is on the right side from the centre C of the beam (in Fig. 3 it corresponds to the point (10)), the point N is below the center C on the long axis of the beam's profile. In the coordinate system, which is associated with the first retroreflector prism (2) (position C2) rotated at an angle $[-\Theta]$, the short axis of the beam's profile is rotated at an angle $\Theta$ in respect to the centre-line (16). After the first reflection (position C3), the image is turned up and the short axis of the beam's profile rotates at an angle $[+\Theta]$ with respect to the center line (16). At the position C4 we transit to the coordinate system associated with the second prism (3) (Fig. 5): the edge of the second prism (17) is rotated at an angle $\varphi$ in respect to the centre-line (16) of the first prism, and the short axis of the beam's profile makes a +45° angle with the edge of the second prism (17). After the second and the third reflections, the image rotates (position C5) in such a way that the short axis makes a -45° angle with the edge of the second prism (17). At the position C6 we transit back to the coordinate system associated with the first prism (2): the short axis of the beam's profile gets rotated at $[-(90 - 0)]$ angle in respect to the centre-line (16) of the first prism. After the fourth reflection (position C7) the short axis of the beam'sprofile rotates at $[+(90 - 0)]$ angle in respect to the centre-line (16). At the position C8 we are back to the laboratory coordinates in the reference plane **g**, which can be associated with the laser active medium or in the case of the OPG, associated with the nonlinear crystal: the short axis of the beam's profile becomes the vertical axis and the long axis becomes the horizontal axis; the point M goes to the bottom of the beam's profile (in Fig. 3 it corresponds to the point (15)), and the point N goes to the right of the beam's profile. The distances from the centre of the beam are preserved. After the comparison of beam's profiles in positions C1 and C8 we can state, that the proposed retroreflector interchanges the vertical and the horizontal axes of the beam's profile. Therefore the retroreflector (1) of this invention performs the same rotation operation of the beam's profile, as the Porro prism rotated by 45°, described in the prior art.

Fig. 3 illustrates the retroreflector, when $\Theta = +26°$, and $\varphi = -19°$.

In a more general case, the retroreflector with 4 reflections interchanges the vertical and the horizontal axes of the incident beam's profile, if the following condition is satisfied:

$$\Theta - \varphi = \pm 45°; \pm 135°; \pm 225°;$$

In Fig. 5 the trajectory of the same beam (10-15) is shown as it propagates through the retroreflector (1) and the positions D1-D9 mark the points, where the changes of the beam polarization will be observed. Also, several coordinate systems are drawn, where the polarization changes will be observed: $XYZ_1$ and $-XYZ_5$ are the laboratory coordinate systems, $P_1S_1Z_1$, $P_1'S_1'Z_2$, $P_3S_3Z_4$ and $P_3'S_3'Z_5$ are the coordinate systems associated with the first prism (2) of the retroreflector, and $P_2S_2Z_2$, $P_2S_2Z_3$ and $P_2''S_2''Z_4$ are the coordinate systems associated with the second prism (3) of the retroreflector.

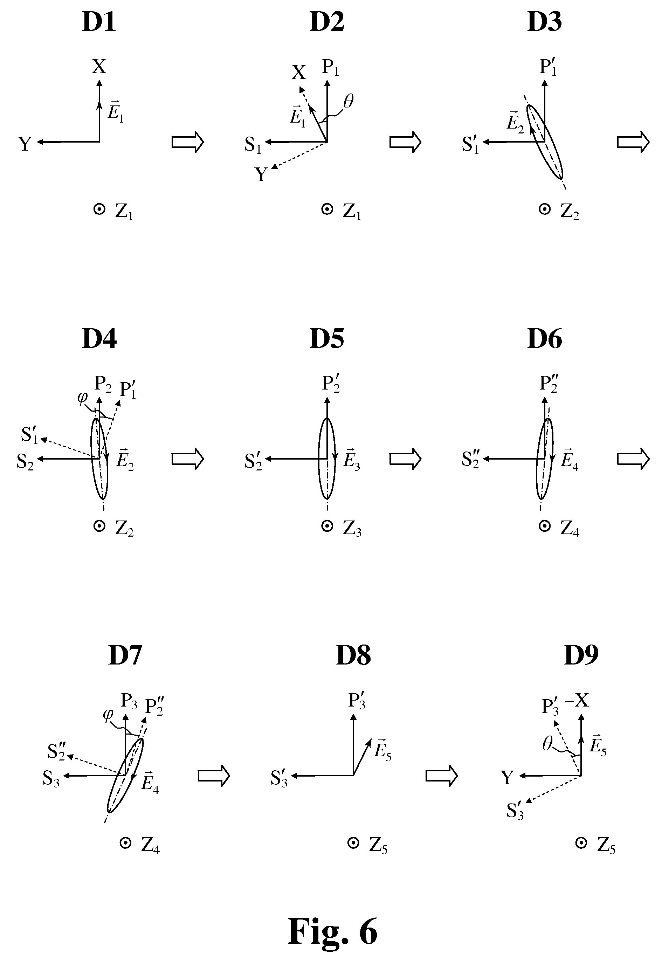

Fig. 6 illustrates the variation of the beam polarization state during the propagation of the beam through the proposed retroreflector. There are beam polarizations: D1, D2 - before the retroreflector, D3, D4 - after the first reflection, D5 - after the second reflection, D6, D7 - after the third reflection, D8, D9 - after the fourth reflection. In the positions D1 and D9 the polarization vector is presented in the coordinate systems associated with the reference plane **g**, i.e. in the laboratory coordinate systems. In the positions D2-D8 the polarization vector or the ellipse is presented in the local coordinate systems associated with the reflection planes of the retroreflector. The direction of the observation in all the cases is the direction of the beam propagation.

The initial light beam polarization is linear and its vector $E_1$ has a direction X in the plane **g** (position D1). Whereas the first prism (2) of the retroreflector is turned in respect to the laboratory coordinate system, the polarization direction vector $E_1$ forms an angle $\Theta$ with an axis $p$ ($P_1$) of the prism (2) (position D2). At the moment of the total internal reflection, the $s$ and $p$ polarization components experience different phase shifts, what results in changing the polarization state to an elliptical after the first reflection (position D3). The long axis of the polarization ellipse $E_2$ is inclined in respect to the axes $P_1$ and $S_1$. In the coordinate systems associated with the second prism (3) the axes of the polarization ellipse $E_2$ form a different angle with the coordinate axes $P_2$ and $S_2$, as a result, during the second reflection, the length of $s$ and $p$ polarization components differ from the one obtained during the first reflection. After the second reflection (position D5), the *s* and *p* polarization components again experience a different phase shift, therefore the size and the orientation of the polarization ellipse change again. In the retroreflector with 4 reflections (depicted on Fig. 1, Fig. 3, Fig. 5), after the second reflection, the axes of the polarization ellipse $E_3$ coincide with the axes $P_2$ and $S_{2'}$ that is the phase difference between the polarization components *s* and *p* is $\Delta\varphi = \pi/2$. The components *s* and *p* are the same during the second and the third reflections, and the polarization components experience the same phase shift. As a result in position D6 the axis of the polarization ellipse $E_4$ rotates to the direction, which is symmetric to the polarization direction in the position D4. The dimensions of the ellipse $E_4$ and the ellipse $E_2$ are the same. Before the fourth reflection (position D7) in the coordinate system, associated with the first prism (2), the polarization ellipse $E_4$ forms an angle with the axis $P_3$, which is equal to the ellipse inclination angle at the position D3 just symmetrically opposite. During the fourth reflection, the components *s* and *p* do not coincide with the components *s* and *p* of the second and the third reflections, but they coincide with the components *s* and *p* of the first reflection. After the fourth reflection, in the position D8, the polarization again becomes linear. The resulted direction of the beam's polarization vector $E_5$ makes an angle $\Theta$ with the axis $P_{3'}$ this means that after four reflections the total phase difference between the polarization components *s* and *p* is $\Delta\varphi = \pi$. The polarization vector $E_5$ coincides with the axis [-X] of the laboratory coordinate system. Consequently, the polarization vector $E_5$ is anti-parallel to the initial vector $E_1$, and their phases differ by $\pi$.

Although the linear polarization is not retained inside the retroreflector, the polarization is again linear after the retroreflector and its orientation coincides with the initial orientation, though its phase is different. The proposed retroreflector performs the same operation of rotating the beam's profile and preserving the direction of the polarization as do two elements of the prior art (a Porro prism at 45° angle and $\lambda/2$ phase retardation plate).

Fig. 5 and Fig. 6 present the case, where $\Theta = +26°$ and $\varphi = -19°$. Such set of angles is calculated for the retroreflector, which has the refraction index n = 1.455 (fused quartz at 710 nm). Another set of angles, where $\Theta = -26°$ and $\varphi = +19°$, is possible for the same refraction index value, just the orientation of the axes of the polarization ellipse and the rotation direction of the polarization vector are changed. The polarization is right, when $\Theta$ is positive and the polarization is left, when $\Theta$ is negative (the rotation direction of the polarization vector does not vary during the transit through the retroreflector. The methodology of obtaining the set of $\Theta = +26°$ and $\varphi$ angles for any other refractive index values are described below.

Below is provided the methodology for obtaining the turning angles of the retroreflector prisms for any refractive index, i.e. for the chosen retroreflector material and the radiation wavelength.

For the beam's profile to experience an interchange of the vertical and the horizontal coordinates during one transition through the retroreflector (1), it is necessary to satisfy the following condition (beam's profile rotation condition):

$$\theta - \varphi = \pm 45^{\circ} + k \cdot 180^{\circ}, \qquad\qquad (1)$$

where *k* is an integer number. Thus, there is a number of valid $\theta$ and $\varphi$ solutions. But not all ($\theta$, $\varphi$) sets for the retroreflector (1) ensure stable linear polarization.

The specific values of angles $\theta$ and $\varphi$, for which the retroreflector (1) ensures stable linear polarization can be found using the condition presented below, i.e. the polarization preservation condition. For its derivation consider how the polarization components get distributed during each total internal reflection and what phase shift they experience.

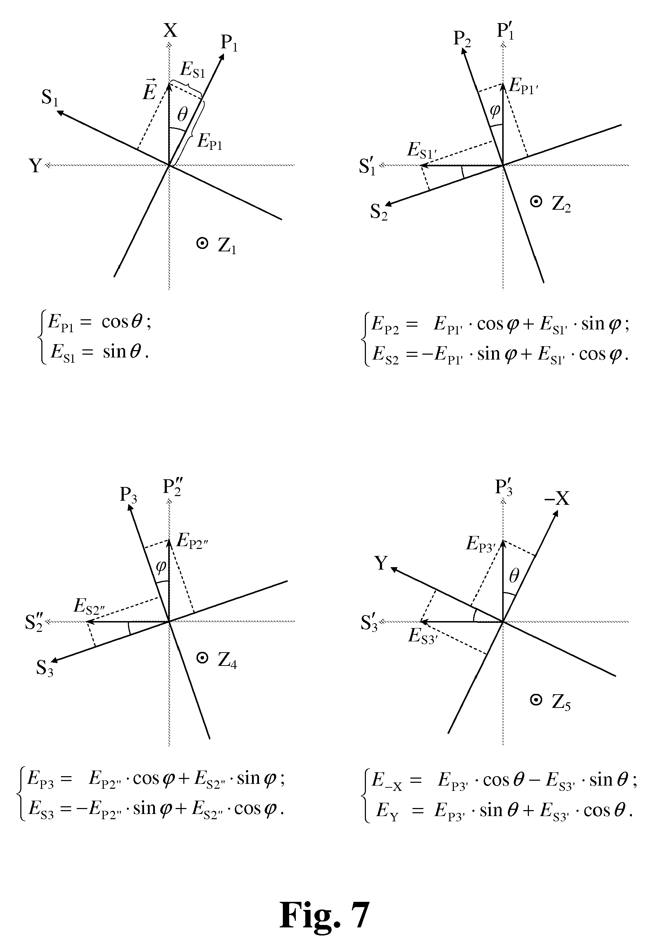

The relations of the polarization amplitude components directly follow from the illustrations of Fig. 7 showing the mutual orientation of the coordinate systems. There, as in Fig. 1, Fig. 3 and Fig. 5, is the case, where the first retroreflector prism is turned clockwise, and the second prism is turned counterclockwise. XY and -XY are the laboratory coordinate system; $P_1S_1$, $P_1'S_{1'}$, $P_3S_3$ and $P_3'S_{3'}$ are the coordinate systems associated with the first retroreflector prism, and $P_2S_2$, $P_2'S_{2'}$ and $P_2''S_{2''}$ are associated with the second retroreflector prism. The direction of observation is the direction of beam propagation (see Fig. 5). During the transformation of the coordinate system, the variations of the polarization amplitude components depend only on the turning angles of the retroreflector prisms, i.e. they are related only to the retroreflector geometry. Note: although the module marks are omitted in the formulas, but the absolute angle $\theta$ and $\varphi$ values are given.

The phase shifts obtained during reflections depend on the angle of the incidence and the refractive index of the prism's material. In the case where all the incident angles are equal to 45 degrees and both prisms are made from the same transparent material (the first version of retroreflector (1)), the phase shifts between the *s* and *p* polarization components ($\Delta\varphi = \varphi_s - \varphi_p$) are the same. The polarization components *s* and *p* in respect to each specific reflection plane are considered.

The following sequence of equations has to be solved:

$$\begin{cases} E_{P1} = \cos\theta\,; \\ E_{S1} = \sin\theta\,. \end{cases} \tag{2}$$

$$\begin{cases} E_{P1'} = E_{P1}\,; \\ E_{S1'} = E_{S1} \cdot e^{i\cdot\Delta\phi}\,. \end{cases} \tag{3}$$

$$\begin{cases} E_{P2} = E_{P1'} \cdot \cos\varphi + E_{S1'} \cdot \sin\varphi\,; \\ E_{S2} = -E_{P1'} \cdot \sin\varphi + E_{S1'} \cdot \cos\varphi\,. \end{cases} \tag{4}$$

$$\begin{cases} E_{P2''} = E_{P2}\,; \\ E_{S2''} = E_{S2} \cdot e^{i\cdot 2\Delta\phi}\,. \end{cases} \tag{5}$$

$$\begin{cases} E_{P3} = E_{P2''} \cdot \cos\varphi + E_{S2''} \cdot \sin\varphi\,; \\ E_{S3} = -E_{P2''} \cdot \sin\varphi + E_{S2''} \cdot \cos\varphi\,. \end{cases} \tag{6}$$

$$\begin{cases} E_{P3'} = E_{P3}\,; \\ E_{S3'} = E_{S3} \cdot e^{i\cdot\Delta\phi}\,. \end{cases} \tag{7}$$

$$\begin{cases} E_{-X} = E_{P3'} \cdot \cos\theta - E_{S3'} \cdot \sin\theta\,; \\ E_{Y} = E_{P3'} \cdot \sin\theta + E_{S3'} \cdot \cos\theta\,. \end{cases} \tag{8}$$

The equation (2) presents a resolution of the polarization vector of unitary length ($E_X = 1$, $E_Y = 0$) inclined at an angle $\theta$ to the $p$ axis ($P_1$) of the first retroreflector prism. $E_{S1}$ is the $s$ polarization component, and $E_{P1}$ - $p$ polarization component in the first prism's coordinate system before the first reflection. The equation (3) presents the obtained phase shift $\Delta\varphi$, between $s$ and $p$ polarization components ($E_{S1'}$ and $E_{P1'}$) during the first reflection. The dynamic phase, the phase shift due to the propagation through the material, is the same for both components, thus only the phase shift contribution caused by the total internal reflection is considered.

As the retroreflector (1) prisms are mutually rotated at angle $\varphi$, the $s$ and $p$ polarization components in the second prism coordinate system ($P_2S_2$) do not coincide with the $s$ and $p$ components in the first prism's coordinate system ($P_1S_1$). In order to continue, one has to perform the transformation of the radiation polarization components. The equation (4) shows an expression of the $s$ and $p$ polarization components ($E_{S2}$ and $E_{P2}$) in the new coordinate system. The second and the third reflections can be analyzed together because their planes of incidence coincide and the phase shifts obtained are the same. After the third reflection $s$ and $p$ polarization components ($E_{S2''}$ and $E_{P2''}$) are expressed by the equation (5).

The equation (6) again performs the transformation of the coordinate system, related to the first retroreflector prism: $E_{S3}$ is the component of the s polarization, and $E_{P3}$ - the component of the $p$ polarization in the coordinate system of the first prism before the fourth reflection; and the components ($E_{S3'}$ and $E_{P3'}$) of the $s$ and $p$ polarizations are expressed by the equation (7) after the fourth reflection.

Two perpendicular polarization components are expressed by the equation (8) on the coordinate system -XY.

The final polarization vector (the polarization vector after four reflections) must be parallel to the X axis. Thus, the polarization condition can be written as follows:

$$\begin{cases} E_{-\mathrm{X}} \cong \pm 1\,; \\ E_{\mathrm{Y}} = 0\,. \end{cases} \qquad (9)$$

This can only be true, if the $E_{S3'}$ and $E_{P3'}$ components experience the phase shift $\pi$. Then the task can be solved in complex numbers. Note: the formulas (2)-(8) need to be written using the absolute angle $\theta$ and $\varphi$ values.

In a general case, the methodology for finding the retroreflector characteristic angles, for example, if the retroreflector is composed of more than 4 reflecting surfaces, is as follows:

1) find $p$ and $s$ polarization components before the first reflection on the coordinate system of the first reflection surface:

$$\begin{cases} E_{\mathrm{P1}} = \cos\alpha_1\,; \\ E_{\mathrm{S1}} = \sin\alpha_1\,; \end{cases} \qquad (10)$$

Here, $\alpha_1$ is a turning angle between the coordinate system of the first reflection surface and the laboratory coordinate system, i.e. the angle is between the unitary polarization vector of the incident beam and $p$ axis in the coordinate system of the first reflection surface.

2) perform such operations N times (the same number of times as the number of reflections): perform the transformation to the new coordinate system and multiply it by the phase member.

The general formula of the coordinate system transformation:

$$\begin{cases} E_{\mathrm{P}(i+1)} = E_{\mathrm{P}i'} \cdot \cos\alpha_{i+1} - E_{\mathrm{S}i'} \cdot \sin\alpha_{i+1}\,; \\ E_{\mathrm{S}(i+1)} = E_{\mathrm{P}i'} \cdot \sin\alpha_{i+1} + E_{\mathrm{S}i'} \cdot \cos\alpha_{i+1}\,; \end{cases} \qquad (11)$$

where $E_{Pi'}$ and $E_{Si'}$ are the polarization components in the $i$-th reflection coordinate system after the reflection, and $E_{P(i+1)}$, $E_{S(i+1)}$ are the polarization components on the $(i+1)$-th reflection coordinate system before the reflection. $\alpha_{i+1}$ is the turning angle between the coordinate systems, which is positive, if the $(i+1)$-th coordinate system is turned clockwise, or negative, if it is turned counterclockwise in respect to the $i$-th coordinate system.

After the $(i+1)$-th reflection, the polarization components are recorded as follows:

$$\begin{cases} E_{\mathrm{P}(i+1)'} = E_{\mathrm{P}(i+1)}\,; \\ E_{\mathrm{S}(i+1)'} = E_{\mathrm{S}(i+1)} \cdot \mathrm{e}^{i \cdot \Delta\phi_{i+1}}\,; \end{cases} \qquad (12)$$

where the $\Delta\varphi_{i+1}$ is the phase shift between the $s$ and $p$ components obtained during the $(i+1)$-th reflection.

3) applied N times the (11) and (12) formulas, it is returned to the laboratory coordinate system. The vertical and the horizontal polarization components can be found from:

$$\begin{cases} E_{\mathrm{V}} = E_{\mathrm{PN'}} \cdot \cos\alpha_{\mathrm{N+1}} - E_{\mathrm{SN'}} \cdot \sin\alpha_{\mathrm{N+1}}\,; \\ E_{\mathrm{H}} = E_{\mathrm{PN'}} \cdot \sin\alpha_{\mathrm{N+1}} + E_{\mathrm{SN'}} \cdot \cos\alpha_{\mathrm{N+1}}\,. \end{cases} \qquad (13)$$

$E_{PN'}$ and $E_{SN'}$ are the two perpendicular polarization components after N reflections in the coordinate system related to the N-th reflection surface, and the $E_V$ and $E_H$ are the vertical and the horizontal polarization components after N reflections in the laboratory coordinate system, $\alpha_{N+1}$ ia a turning angle between the laboratory coordinate system and the N-th reflection coordinate system.

If the beam polarization after N reflections has to be linear and to coincide with the initial polarization, it has to satisfy the following condition:

$$\begin{cases} E_{\mathrm{V}} \cong \pm 1 \,; \\ E_{\mathrm{H}} = 0 \,. \end{cases} \qquad (14)$$

It is true only, when the experienced total phase shift between the *s* and p polarization components during N reflections is equal to $\pm\pi$, $\pm 3\pi$, $\pm 5\pi$, etc., i.e.

$$[\arg(E_{\mathrm{SN}'}) - \arg(E_{\mathrm{PN}'})] - [\arg(E_{\mathrm{S1}}) - \arg(E_{\mathrm{P1}})] = \pm\,(2k-1)\cdot\pi. \qquad (15)$$

$E_{\mathrm{PN}'}$ and $E_{\mathrm{SN}'}$ are the polarization components after the last - the N-th - reflection; $\arg(E_{\mathrm{SN}'})$ and $\arg(E_{\mathrm{PN}'})$ are the phase factors (multipliers) of complex numbers $E_{\mathrm{SN}'}$ and $E_{\mathrm{PN}'}$; $\arg(E_{\mathrm{S1}})$ and $\arg(E_{\mathrm{P1}})$ are the phase factors (multipliers) of complex numbers $E_{\mathrm{S1}}$ and $E_{\mathrm{P1}}$; k is an integer number. The (14) and (15) are the polarization conditions.

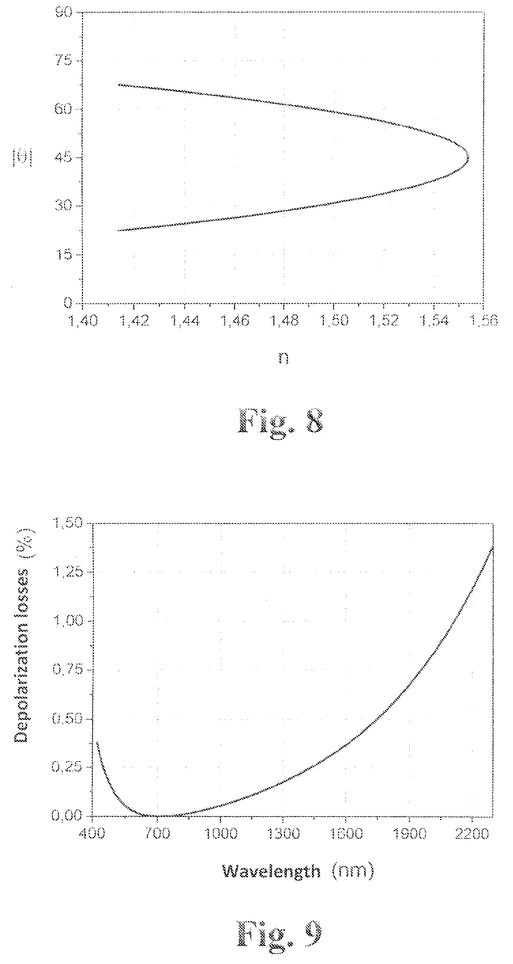

There are several solution sets of $\{\Theta; \varphi\}$ for each value of the refraction index (in a certain range 1.41...1.554), which satisfies the condition for the profile (the interchange of the vertical and the horizontal axes) and the condition for the polarization (the preservation of the polarization direction). The range of solutions for the angle $\Theta$ for different refraction indexes is illustrated in Fig. 8. Modulus notation means that the prism may be rotated both clockwise and counterclockwise. The angle $\varphi$ can be found from:

$$\begin{cases} \theta - \varphi = +45^{\circ}; -135^{\circ}; +225^{\circ}; \ldots, kai\ \theta > 0\,; \\ \theta - \varphi = -45^{\circ}; +135^{\circ}; -225^{\circ}; \ldots, kai\ \theta < 0\,. \end{cases} \qquad (16)$$

Note: the condition (16) is narrower than the condition (1). The objectives of this invention can be fulfilled in quite a wide range of refraction index values.

As discussed above, the retroreflector of this invention allows retaining the unchangeable linear polarization for the fixed refraction index, when the two perpendicular axes of the beam's profile are interchanged. In the tunable radiation source, it is necessary to maintain the polarization steady in the entire tuning range.

One of the possibilities to achieve this is by changing the turning angles of the prisms for different wavelengths, but that is inconvenient and the stability of the laser operation could suffer.

Another possibility is to optimize the geometry of the retroreflector for a single central wavelength and keep the angle stable, while tuning for the wavelength. The retroreflector will not operate perfectly for the entire tuning range, i.e. the linear polarization will not be ensured and some tangential polarization components resulting in an elliptical polarization will appear. Concerning the influence of the retroreflector on the linearly polarized beam, when the retroreflector is used in a free space (in the case, where the retroreflector is a separate optical element), one can say that the polarization purity of the beam gets degraded. Concerning the influence of the retroreflector on the linearly polarized beam, when the retroreflector is used in a cavity, as a result, this means that the polarization losses in the resonator evolve as the amplification in the laser cavity or in the nonlinear crystal of the optical parametrical generator is polarization-sensitive. Generally, the term "depolarization losses" describes the ratio of the two orthogonal polarization components $|E_H|^2/|E_V|^2\cdot100\%$.

The main advantage of this invention, when we use the retroreflector prism made from the material with low refraction index dispersion, is that the depolarization losses are low in a wide wavelength range. Depolarization losses are less than in the case of the retroreflector made from a combination of a Porro prism and the phase retardation plate. The calculated depolarization losses as a function of a wavelength are presented in Fig. 9. This curve illustrates the "depolarization losses" for the retroreflector made from a fused quartz and optimized for the 710 nm wavelength ($|\Theta| = 26°$, $|\varphi| = 19°$), which ensures the depolarization losses of less than 1.5% in the wavelength range from 400 nm to 2300 nm (the parametric generation range of the OPG using a nonlinear crystal BBO and pumped by a 355 nm laser). The polarization purity, better than 100:1, is ensured up to 2100 nm. The range of low losses is controlled simply by changing the geometry of the retroreflector.

An application of the proposed retroreflector in the resonator of the optical parametric generator (OPG) enables to improve the beam quality of OPG, i.e. to symmetrize the beam divergence, to homogenize the intensity distribution, while ensuring high purity of polarization throughout the entire tuning range of the generator.

The proposed retroreflector, instead of avoiding the phase shift between the *s* and *p* components, elaborates it. This property of the total internal reflection is used to achieve the desired purpose. The property of the proposed retroreflector to retain the linear polarization after 4 or more said reflections depends only on the refractive index of an optical material. It is easy to select materials with low refractive index dispersion for a wide wavelength range. Thus, the application of this retroreflector inside an optical parametric generator resonator can improve the beam quality of the said generator without reducing the efficiency of the parametric interaction and affecting the polarization purity of the output radiation in the entire tuning range of the said generator.

The foregoing description of the preferred embodiments of the present invention has been provided for the purpose of illustration and description. It is not intended to be exhaustive or to limit the invention to the precise form disclosed. Obviously, many modifications and variations will be apparent to the practitioners skilled in the art. The embodiments were chosen and described in order to best explain the principles of the invention and its practical applications, thereby enabling others skilled in the art to understand the invention for various embodiments and with various modifications as are suited to the particular use contemplated. It is intended that the scope of the invention be defined by the following claims and their equivalents.

**Claims**

1. Method of retro-reflection of a light beam interchanging a vertical and a horizontal coordinates of the light beam's profile and retaining the light beam's linear polarization, which comprises light beam reflection in series from several total internal reflection planes of a transparent material,
   **characterized in that**
   the incident light beam experiences four total internal reflections from three total internal reflection planes (b, e, f, b) of a transparent material during each of which the incident light beam experiences a phase shift between the perpendicular (s) and the parallel (p) polarization components, along with image rotation ,where a spatial arrangement of said total internal reflection planes (b, e, f, b) is such that:

   - during the first reflection the first total internal reflection plane (b) changes propagation direction of the incident light beam from a first beam path (4) to a second beam path (5), further
   - the light beam propagating in the second beam path (5), when reflected from the second and the third total international reflection planes (e) and (f), changes direction of propagation at 180° angle and reverts back onto said second beam path (5) towards the first total internal reflection plane (b),
   - during the fourth reflection the first total internal reflection plane (b) changes propagation direction of the light beam from the second beam path (5) back to the first beam path (4),
   - a plane comprising the first and the second beam paths (4, 5) makes an angle θ with a polarization vector $(\vec{E})$ of the light beam incident to the first total internal reflection plane (b),
   - a plane comprising the second beam path (5) and which is perpendicular to both second and third total internal reflection planes (e, f)" makes an angle φ with said plane comprising the first and the second beam paths (4, 5), wherein
   the values of the angles θ and φ depend on a refractive index of the transparent material, in which said total internal reflections occur, and are set so that after the fourth total internal reflection a total phase shift between perpendicular ($E_{S3'}$) and parallel ($E_{P3'}$) polarization components of the light beam is equal to π radians, wherein said angles θ and φ are selected to satisfy the condition:

$$\theta - \varphi = \pm\, 45^{\circ} + k\cdot 180^{\circ},$$

   whereas k = 0, 1 or 2 .

2. Retroreflector interchanging a vertical and a horizontal coordinates of light beam's profile and retaining the light beam's linear polarization, comprising several total internal reflection planes arranged on a path of an incident light beam through a transparent material, which consequently back-reflects said light beam,
   **characterized in that**
   the retroreflector comprises two total internal reflection prisms (2, 3) of an optically transparent material which form three total internal reflection planes (b, e, f, b) from which the light beam experiences four total internal reflections, and are arranged such that the first prism (2) is a steering prism, which is placed on a first beam path (4) of the incident light beam and forms the first total internal reflection plane (b) which during a first total internal reflection changes propagation direction of said light beam to a second beam path (5) on which the second prism (3) lies, which is a back-reflecting Porro prism, and forms second and third total internal reflection planes (e, f) which during a second and a third total internal reflections directs said light beam back towards the first total internal reflection plane (b) of said first prism (2), where
the light beam experiences a fourth total internal reflection and is deflected from the second beam path (5) to the first beam path (4) back,
the light beam at each reflection from said total internal reflection planes (b, e, f, b) acquires an image rotation and a phase shift between perpendicular (s) and parallel (p) polarization components,
the first prism (2) is rotated about said first beam path (4) at an angle θ so that its apex (A1) remains orthogonal to the beam path (4), where for a given angle θ between a polarization vector (E) of the light beam incident to the retroreflector (1) and a plane which comprises said first and second beam paths (4, 5),
the second prism (3) is rotated about the second beam path (5) at an angle φ so that its apex (A2) remains orthogonal to the beam path (5),
where the angle φ is an angle between the apex (A2) of the second prism (3) and the apex (A1) of the first prism (2),
the values of the angles θ and φ depend on a refractive index of the transparent material of which the retroreflector is made,
and are set so that after the fourth total internal reflection inside the retroreflector a total phase shift between perpendicular ($E_{S3'}$) and parallel ($E_{P3'}$) polarization components of the light beam is equal to π radians, wherein said angles θ and φ are selected to satisfy the condition:

$$\theta - \varphi = \pm 45^{\circ} + k \cdot 180^{\circ},$$

whereas k= 0, 1 or 2 .

3. Retroreflector according to claim 2, **characterized in that** said steering prism (2) is a right angled prism.

4. Retroreflector according to claim 2, **characterized in that** said steering prism (2) is a non-right angled prism.

5. Retroreflector according to any one of claims 2 to 4, **characterized in that** said first and second prisms (2, 3) are made of the same transparent optical material.

6. Retroreflector according to any one of claims 2 to 5, **characterized in that** said first and second prisms (2, 3) of the retroreflector (1) are made from a single piece of transparent material.

7. Optical parametric generator comprising optical resonator formed by two end mirrors,wherein one of said end mirrors is performed as a retroreflector according to any of claims 2 to 6.


**Patentansprüche**

1. Verfahren zur Retroreflexion eines Lichtstrahls durch Austausch von vertikalen und horizontalen Koordinaten des Lichtstrahlprofils und Beibehaltung der linearen Polarisation des Lichtstrahls, das die serienmässige Lichtstrahlreflexion von mehreren Totalreflexionsebenen eines transparenten Materials umfasst,
**dadurch gekennzeichnet, dass**
der einfallende Lichtstrahl vier Totalreflexionen von drei Totalreflexionsebenen (b, e, f, b) eines transparenten Materials erfährt, während der einfallende Lichtstrahl bei jeder Totalreflexion eine Phasenverschiebung zwischen den senkrechten (s) und parallelen (p) Polarisationskomponenten zusammen mit einer Bildrotation erfährt, wobei eine räumliche Anordnung der genannten Totalreflexionsebenen (b, e, f, b) wie folgt ist:

- während der ersten Reflexion ändert die erste Totalreflexionsebene (b) die Ausbreitungsrichtung des einfallenden Lichtstrahls eines ersten Strahlenwegs (4) zu einem zweiten Strahlenweg (5), weiterhin
- ändert der Lichtstrahl, der sich in dem zweiten Strahlenweg (5) ausbreitet, wenn er von den zweiten und dritten Totalreflexionsebenen (e) und (f) reflektiert wird, die Ausbreitungsrichtung um einen 180° Winkel und kehrt zu dem genannten zweiten Strahlenweg (5) in Richtung der ersten Totalreflexionsebene (b) zurück,
- während der vierten Reflexion der ersten Totalreflexionsebene (b) ändert sich die Ausbreitungsrichtung des Lichtstrahls vom zweiten Strahlenweg (5) zurück zum ersten Strahlenweg (4),
- eine Ebene umfassend die ersten und zweiten Strahlenwege (4, 5) bildet einen Winkel θ mit einem Polarisationsvektor (E̅) des Lichtstrahleinfalls zur ersten Totalreflexionsebene (b),
- eine Ebene, die den zweiten Strahlenweg (5) umfasst und senkrecht zur zweiten und dritten Totalreflexionsebene (e, f) ist, bildet einen Winkel φ mit der genannten Ebene, umfassend die ersten und zweiten Strahlenwege (4, 5), wobei

die Werte der Winkel θ und φ vom Brechungsindex des transparenten Materials abhängen, in dem diese Totalreflexionen auftreten, und so eingestellt sind, dass nach der vierten Totalreflexion eine Gesamtphasenverschiebung zwischen den senkrechten ($E_{S3'}$) und parallelen ($E_{P3'}$) Polarisationskomponenten des Lichtstrahls gleich dem n Radianten ist, wobei die Winkel θ und φ zur Erfüllung der folgenden Bedingung gewählt sind:

$$\theta - \varphi = \pm\, 45° + k \cdot 180°,$$

wobei k = 0, 1 oder 2.

2. Retroreflektor, der vertikale und horizontale Koordinaten des Lichtstrahlprofils austauscht und die lineare Polarisation des Lichtstrahls beibehält, umfassend mehrere Totalreflexionsebenen, die auf einem Weg eines einfallenden Lichtstrahls durch ein transparentes Material angeordnet sind, das folglich den Lichtstrahl zurückreflektiert, **dadurch gekennzeichnet, dass**

der Retroreflektor zwei totalreflektierende Prismen (2, 3) eines optisch transparenten Materials umfasst, die drei Totalreflexionsebenen (b, e, f, b) bilden, von denen der Lichtstrahl vier Totalreflexionen erfährt und die so angeordnet sind, dass

das erste Prisma (2) ein Lenkungsprisma ist, das auf einem ersten Strahlenweg (4) des einfallenden Lichtstrahls positioniert ist und die erste Totalreflexionsebene (b) bildet, die während einer ersten Totalreflexion die Ausbreitungsrichtung des Lichtstrahls auf einen zweiten Strahlenweg ändert (5), auf dem das zweite Prisma (3) liegt, das ein zurückreflektierendes Porroprisma ist und zweite und dritte Totalreflexionsebenen (e, f) bildet, das während einer zweiten und einer dritten Totalreflexion den Lichtstrahl zurück in Richtung der ersten Totalreflexionsebene (b) des ersten Prismas (2) leitet, wobei der Lichtstrahl eine vierte Totalreflexion erfährt und von dem zweiten Strahlenweg (5) zurück zum ersten Strahlenweg (4) umgelenkt wird,

der Lichtstrahl bei jeder Reflektion der Totalreflexionsebenen (b, e, f, b) eine Bildrotation und eine Phasenverschiebung zwischen den senkrechten (s) und parallelen (p) Polarisationskomponenten erlangt,

das erste Prisma (2) um den ersten Strahlenweg (4) um einem Winkel θ gedreht wird, so dass seine Spitze (A1) orthogonal zum Strahlenweg (4) bleibt, wobei für einen festgelegten Winkel θ zwischen einem Polarisationsvektor ($\overline{E}$) des Lichtstrahleinfalls zum Retroreflektor (1) und einer Ebene, die die ersten und zweiten Strahlenwege (4, 5) umfasst,

das zweite Prisma (3) um den zweiten Strahlenweg (5) um einen Winkel φ gedreht wird, so dass seine Spitze (A2) orthogonal zum Strahlenweg (5) bleibt, wobei der Winkel φ ein Winkel zwischen der Spitze (A2) des zweiten Prismas (3) und der Spitze (A1) des ersten Prismas (2) ist,

die Werte der Winkel θ und φ vom Brechungsindex des transparenten Materials abhängen, aus dem der Retroreflektor hergestellt ist, und so eingestellt sind, dass nach der vierten Totalreflexion innerhalb des Retroreflektors eine Gesamtphasenverschiebung zwischen den senkrechten ($E_{S3'}$) und parallelen ($E_{P3'}$) Polarisationskomponenten des Lichtstrahls gleich dem n Radianten ist, wobei die Winkel θ und φ zur Erfüllung der folgenden Bedingung gewählt sind:

$$\theta - \varphi = \pm\, 45° + k \cdot 180°,$$

wobei k = 0, 1 oder 2.

3. Retroreflektor nach Anspruch 2, **dadurch gekennzeichnet, dass** das Lenkungsprisma (2) ein rechtwinkliges Prisma ist.

4. Retroreflektor nach Anspruch 2, **dadurch gekennzeichnet, dass** das Lenkungsprisma (2) kein rechtwinkliges Prisma ist.

5. Retroreflektor nach einem der Ansprüche 2 bis 4, **dadurch gekennzeichnet, dass** die ersten und zweiten Prismen (2, 3) aus dem gleichen transparenten optischen Material hergestellt sind.

6. Retroreflektor nach einem der Ansprüche 2 bis 5, **dadurch gekennzeichnet, dass** die ersten und zweiten Prismen (2, 3) des Retroreflektors (1) aus einem einzigen Stück transparenten Materials hergestellt sind.

7. Optisch parametrischer Generator umfassend einen aus zwei Endspiegeln gebildeten optischen Resonator, wobei einer der Endspiegel als Retroreflektor nach einem der Ansprüche 2 bis 6 verwendet wird.

**Revendications**

1. Procédé de rétroréflexion d'un faisceau de lumière échangeant des coordonnées verticale et horizontale du profil d'un faisceau de lumière et maintenant la polarisation linéaire du faisceau de lumière, qui comprend la réflexion du faisceau de lumière en série à partir de plusieurs plans de réflexion interne totale d'un matériau transparent,
   **caractérisé en ce que**
   le faisceau de lumière incident subit quatre réflexions internes totales à partir de trois plans de réflexion interne totale (b, e, f, b) d'un matériau transparent pendant chacune desquelles le faisceau de lumière incident subit un déphasage entre les composantes de polarisation perpendiculaire (s) et parallèle (p), avec une rotation d'image, dans lequel un agencement spatial desdits plans de réflexion interne totale (b, e, f, b) est tel que :

   - pendant la première réflexion, le premier plan de réflexion interne totale (b) change la direction de propagation du faisceau de lumière incident d'un premier trajet de faisceau (4) à un deuxième trajet de faisceau (5), en outre
   - le faisceau de lumière se propageant dans le deuxième trajet de faisceau (5), lorsqu'il est réfléchi à partir des deuxième et troisième plans de réflexion interne totale (e) et (f), change la direction de propagation d'un angle de 180° et retourne sur ledit deuxième trajet de faisceau (5) vers le premier plan de réflexion interne totale (b),
   - pendant la quatrième réflexion, le premier plan de réflexion interne totale (b) change la direction de propagation du faisceau de lumière du deuxième trajet de faisceau (5) de retour au premier trajet de faisceau (4),
   - un plan comprenant les premier et deuxième trajets de faisceau (4, 5) forme un angle $\theta$ avec un vecteur de polarisation ($\vec{E}$) du faisceau de lumière frappant le premier plan de réflexion interne totale (b),
   - un plan comprenant le deuxième trajet de faisceau (5) et qui est perpendiculaire à la fois aux deuxième et troisième plans de réflexion interne totale (e, f) forme un angle $\varphi$ avec ledit plan comprenant les premier et deuxième trajets de faisceau (4, 5), dans lequel

   les valeurs des angles $\theta$ et $\varphi$ dépendent d'un indice de réfraction du matériau transparent, dans lequel lesdites réflexions internes totales se produisent et sont fixées de sorte que, après la quatrième réflexion interne totale, un déphasage total entre les composantes de polarisation perpendiculaire ($E_{S3'}$) et parallèle ($E_{P3'}$) du faisceau de lumière soit égal à $\pi$ radians,
   dans lequel lesdits angles $\theta$ et $\varphi$ sont sélectionnés de manière à satisfaire à la condition :

   $$\theta - \varphi = \pm\, 45° + k \cdot 180°,$$

   où k = 0, 1 ou 2.

2. Rétroréflecteur échangeant des coordonnées verticale et horizontale du profil d'un faisceau de lumière et maintenant la polarisation linéaire du faisceau de lumière, comprenant plusieurs plans de réflexion interne totale agencés sur un trajet d'un faisceau de lumière incident à travers un matériau transparent, qui rétroréfléchit en conséquence ledit faisceau de lumière,
   **caractérisé en ce que**
   le rétroréflecteur comprend deux prismes de réflexion interne totale (2, 3) en un matériau optiquement transparent qui forment trois plans de réflexion interne totale (b, e, f, b) à partir desquels le faisceau de lumière subit quatre réflexions internes totales, et qui sont agencés de sorte que le premier prisme (2) soit un prisme d'orientation qui est placé sur un premier trajet de faisceau (4) du faisceau de lumière incident et forme le premier plan de réflexion interne totale (b) qui, pendant une première réflexion interne totale, change la direction de propagation dudit faisceau de lumière en un deuxième trajet de faisceau (5) sur lequel le deuxième prisme (3) se trouve, lequel est un prisme Porro rétroréfléchissant, et forme des deuxième et troisième plans de réflexion interne totale (e, f) qui, pendant les deuxième et troisième réflexions internes totales, dirigent ledit faisceau de lumière de retour vers le premier plan de réflexion interne totale (b) dudit premier prisme (2), où
   le faisceau de lumière subit une quatrième réflexion interne totale et est défléchi du deuxième trajet de faisceau (5) de retour vers le premier trajet de faisceau (4),
   le faisceau de lumière, à chaque réflexion à partir desdits plans de réflexion interne totale (b, e, f, b), acquiert une rotation d'image et un déphasage entre les composantes de polarisation perpendiculaire (s) et parallèle (p),

le premier prisme (2) est tourné par rapport au dit premier trajet de faisceau (4) d'un angle $\theta$ de sorte que son sommet (A1) reste orthogonal au trajet de faisceau (4), où, pour un angle $\theta$ donné entre un vecteur de polarisation ($\vec{E}$) du faisceau de lumière frappant le rétroréflecteur (1) et un plan qui comprend lesdits premier et deuxième trajets de faisceau (4, 5),

le deuxième prisme (3) est tourné par rapport au deuxième trajet de faisceau (5) d'un angle $\varphi$ de sorte que son sommet (A2) reste orthogonal au trajet de faisceau (5),

dans lequel l'angle $\varphi$ est un angle entre le sommet (A2) du deuxième prisme (3) et le sommet (A1) du premier prisme (2),

les valeurs des angles $\theta$ et $\varphi$ dépendent d'un indice de réfraction du matériau transparent dont le rétroréflecteur est constitué,

et sont fixées de sorte que, après la quatrième réflexion interne totale à l'intérieur du rétroréflecteur, un déphasage total entre les composantes de polarisation perpendiculaire ($E_{S3'}$) et parallèle ($E_{P3'}$) du faisceau de lumière soit égal à n radians,

dans lequel lesdits angles $\theta$ et $\varphi$ sont sélectionnés de manière à satisfaire à la condition :

$$\theta - \varphi = \pm\, 45° + k \cdot 180°,$$

où k = 0, 1 ou 2.

3.  Rétroréflecteur selon la revendication 2, **caractérisé en ce que** ledit prisme d'orientation (2) est un prisme à angle droit.

4.  Rétroréflecteur selon la revendication 2, **caractérisé en ce que** ledit prisme d'orientation (2) est un prisme non à angle droit.

5.  Rétroréflecteur selon l'une quelconque des revendications 2 à 4, **caractérisé en ce que** lesdits premier et deuxième prismes (2, 3) sont réalisés en le même matériau optique transparent.

6.  Rétroréflecteur selon l'une quelconque des revendications 2 à 5, **caractérisé en ce que** lesdits premier et deuxième prismes (2, 3) du rétroréflecteur (1) sont réalisés à partir d'un morceau unique de matériau transparent.

7.  Générateur paramétrique optique comprenant un résonateur optique formé par deux miroirs d'extrémité, dans lequel l'un desdits miroirs d'extrémité est réalisé en tant que rétroréflecteur selon l'une quelconque des revendications 2 à 6.

**Fig. 1**

**Fig. 2**

**Fig. 3**

**Fig. 4**

**Fig. 5**

**Fig. 6**

$$\begin{cases} E_{P1} = \cos\theta\,; \\ E_{S1} = \sin\theta\,. \end{cases}$$

$$\begin{cases} E_{P2} = \ \ E_{P1'} \cdot \cos\varphi + E_{S1'} \cdot \sin\varphi\,; \\ E_{S2} = -E_{P1'} \cdot \sin\varphi + E_{S1'} \cdot \cos\varphi\,. \end{cases}$$

$$\begin{cases} E_{P3} = \ \ E_{P2''} \cdot \cos\varphi + E_{S2''} \cdot \sin\varphi\,; \\ E_{S3} = -E_{P2''} \cdot \sin\varphi + E_{S2''} \cdot \cos\varphi\,. \end{cases}$$

$$\begin{cases} E_{-X} = \ \ E_{P3'} \cdot \cos\theta - E_{S3'} \cdot \sin\theta\,; \\ E_{Y} = \ \ E_{P3'} \cdot \sin\theta + E_{S3'} \cdot \cos\theta\,. \end{cases}$$

# Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7165850 B
- EP 1662623 A
- US 6647033 B